(19) Europäisches Patentamt / European Patent Office / Office européen des brevets

(11) **EP 2 717 648 B1**

(12) **EUROPEAN PATENT SPECIFICATION**

(45) Date of publication and mention
of the grant of the patent:
**16.05.2018 Bulletin 2018/20**

(21) Application number: **11856554.8**

(22) Date of filing: **30.12.2011**

(51) Int Cl.:
***H04W 56/00*** *(2009.01)*

(86) International application number:
**PCT/CN2011/085004**

(87) International publication number:
**WO 2012/097670 (26.07.2012 Gazette 2012/30)**

(54) **METHOD, DEVICE AND MOBILE TERMINAL FOR ACQUIRING TIME**

VERFAHREN, VORRICHTUNG UND MOBILES ENDGERÄT ZUR ZEITERFASSUNG

PROCÉDÉ, DISPOSITIF ET TERMINAL MOBILE D'ACQUISITION DE TEMPS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.04.2014 Bulletin 2014/15**

(73) Proprietor: **Huawei Device (Dongguan) Co., Ltd.
Dongguan, Guangdong, PRC, 523808 (CN)**

(72) Inventor: **HE, Yanzhao
Shenzhen City
Guangdong 518129 (CN)**

(74) Representative: **Thun, Clemens et al
Mitscherlich PartmbB
Patent- und Rechtsanwälte
Sonnenstraße 33
80331 München (DE)**

(56) References cited:
**CN-A- 1 543 718        CN-A- 101 047 924
CN-A- 101 048 006      US-A1- 2002 197 992
US-A- 2007 237 118**

## Description

### TECHNICAL FIELD

The present invention relates to the field of mobile terminals, and in particular, to a time obtaining method and apparatus, and a mobile terminal.

### BACKGROUND

With the development of mobile phone technologies and users' increasing dependence on mobile phones, performance requirements of mobile phones are increasingly high. As a main function of a mobile phone, a clock is used frequently, and requirements on the clock are high. Existing CDMA mobile phones universally support the function of obtaining network time. When an existing CDMA (Code Division Multiple Access) mobile phone is registered on a network, the CDMA mobile phone obtains current network time through computing according to parameters in a sync channel message, thereby achieving time synchronization to ensure accuracy of the clock of the mobile phone.

US2007/0237118A1 provides a method and apparatus for acquiring time information from a CDMA system in a mobile communication terminal. The method includes: searching for a CDMA channel in a predetermined manner when a CDMA modem of module is activated; receiving a sync channel signal via the searched CDMA channel and extracting time of the mobile communication terminal using the extracted time information.

In a process of implementing the present invention, it is found that the prior art has at least the following problems.

In the prior art, only when a mobile phone is registered on a network can the mobile phone obtain current network time. If a current mobile phone (phone-card separated version) does not have a UIM (User Identity Model, user identity model) card, or a PIN (Personal Identification Number, personal identification number) code thereof is locked, or the phone-card integrated version mobile phone cannot be registered on a network due to some reason like roaming setting, the mobile phone cannot obtain network time, so that when having no access to a network service, the mobile phone cannot implement real-time updating of time.

### SUMMARY

In order to solve a problem that a mobile phone cannot implement real-time updating of time when having no access to a network service, embodiments of the present invention provide a time obtaining method and apparatus, and a mobile terminal. The technical solutions are described as follows:

An embodiment of the present invention provides a time obtaining method, including:

receiving, by a mobile terminal, a time obtaining request, and in response to receiving the time obtaining request, determining, by a mobile terminal, whether the mobile terminal has access to a network service;

initiating, by the mobile terminal, an emergency call in response to determining that the mobile terminal has no access to a network service;

receiving, by a mobile terminal, a sync channel message which is obtained through searching during a process of the emergency call and terminating the emergency call, where the sync channel message carries time information; and

obtaining time according to the time information.

An embodiment of the present invention provides a time obtaining apparatus, including:

a judging module, configured to receive a time obtaining request, and determine whether a mobile terminal has access to a network service in response to receiving the time obtaining request;

an emergency call module, configured to initiate an emergency call by the mobile terminal in response to determining that the mobile terminal has no access to a network service;

a receiving module, configured to receive a sync channel message which is obtained through searching during the emergency call process, where

the emergency call module is also configured to terminate the emergency call when the receiving module receives the sync channel message which is obtained through searching during a process of the emergency call, and the sync channel message carries time information; and

an obtaining module, configured to obtain time according to the time information.

An embodiment of the present invention provides a mobile terminal, where the mobile terminal includes the foregoing time obtaining apparatus.

Beneficial effects of the technical solutions provided by the embodiments of the present invention are as follows: in a situation where time synchronization needs to be implemented and a mobile terminal has no access to a network service, the terminal initiates an emergency call and acquires a sync channel message during the emergency call process; once obtaining the sync channel message, the terminal immediately terminates the initiated emergency call process and obtains time according to time information carried in the sync channel message, thereby achieving the purpose of obtaining time from a network side without affecting other services when the terminal has no access to a network service.

**BRIEF DESCRIPTION OF DRAWINGS**

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a flow chart of a time obtaining method according to an embodiment of the present invention;
FIG. 2 is a flow chart of a time obtaining method according to an embodiment of the present invention;
FIG. 3 is a schematic structural diagram of a time obtaining apparatus according to an embodiment of the present invention; and
FIG. 4 is a schematic structural diagram of a time obtaining apparatus according to an embodiment of the present invention.

**DESCRIPTION OF EMBODIMENTS**

To make the objectives, technical solutions, and advantages of the present invention more comprehensible, the following further describes the embodiments of the present invention in detail with reference to the accompanying drawings.

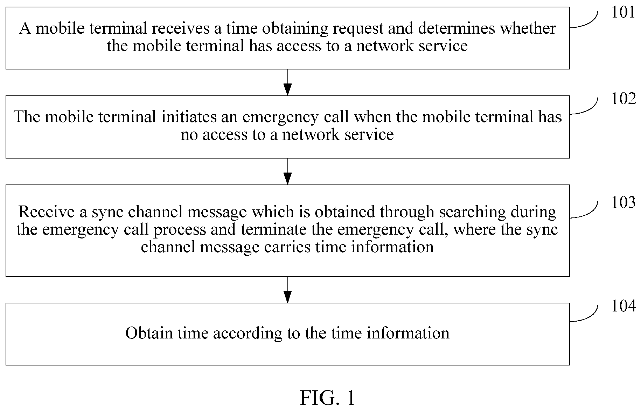

FIG. 1 is a flow chart of a time obtaining method according to an embodiment of the present invention. Referring to FIG. 1, this embodiment includes:

101: A mobile terminal receives a time obtaining request and determines whether the mobile terminal has access to a network service.
102: The mobile terminal initiates an emergency call when the mobile terminal has no access to a network service.
103: Receive a sync channel message which is obtained through searching during the emergency call process and terminate the emergency call, where the sync channel message carries time information.
104: Obtain time according to the time information.

In this method provided by the present invention, in a situation where time synchronization needs to be implemented and a mobile terminal has no access to a network service, the terminal initiates an emergency call and acquires a sync channel message during the emergency call process. Once obtaining the sync channel message, the terminal immediately terminates the initiated emergency call process and obtains time according to time information carried in the sync channel message, thereby achieving the purpose of obtaining time from a network side without affecting other services when the terminal has no access to a network service.

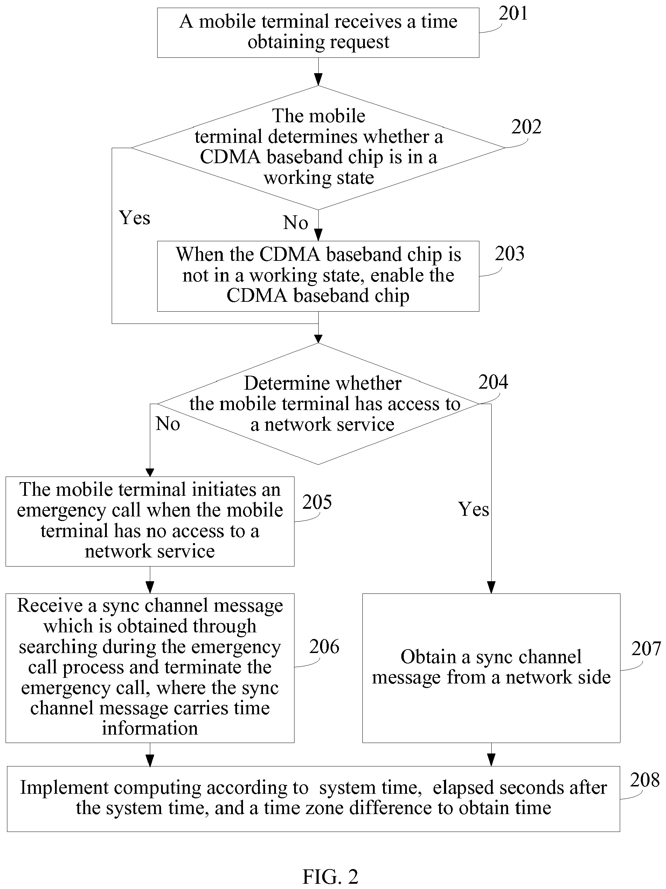

FIG. 2 is a flow chart of a time obtaining method according to an embodiment of the present invention. An executor in this embodiment is a mobile terminal, and the mobile terminal is a mobile terminal including a CDMA baseband chip. Referring to FIG. 2, this embodiment specifically includes:

201: The mobile terminal receives a time obtaining request.
In this embodiment, the time obtaining request may be triggered in multiple manners, which include but are not limited to the following three manners: (1) The mobile terminal displays an interface for manually updating time, where the interface includes a time obtaining option. When needing to obtain time, a user triggers the time obtaining option on the interface for manually updating time provided by the mobile terminal, so that the mobile terminal receives a time obtaining request. (2) When the mobile terminal is delivered or when a user implements setting of the mobile terminal, the mobile terminal is already set to obtain time at a preset interval. Therefore, the mobile terminal periodically triggers a time obtaining request according to the preset interval, so that the mobile terminal receives the time obtaining request. (3) The mobile terminal triggers a time obtaining request when starting up, so that the mobile terminal receives the time obtaining request.

202: The mobile terminal determines whether a CDMA baseband chip is in a working state. If the CDMA baseband chip is in a working state, execute step 204; and if the CDMA baseband chip is not in a working state, execute step 203. The mobile terminal is a mobile terminal including a CDMA baseband chip, so when the mobile terminal is a mobile terminal including multiple baseband chips, it is possible that the current working baseband chip is not a CDMA baseband chip. As only CDMA supports a time synchronization technology and can implement network search and synchronization with a network so that the mobile terminal can obtain accurate time, the working state of the CDMA baseband chip needs to be determined.

203: When the CDMA baseband chip is not in a working state, enable the CDMA baseband chip.

Manners of enabling the CDMA baseband chip include but are not limited to the following:

(1) If the mobile terminal includes at least one CDMA baseband chip and the CDMA baseband chip can be completely powered off, when the CDMA baseband chip is not in a working state, power on the CDMA baseband chip through using a main application processor to enable the CDMA baseband chip.
(2) If the mobile terminal includes at least one CDMA baseband chip and the CDMA baseband is only in an offline mode, when the CDMA baseband chip is not in a working state, forcibly switch the working mode of the CDMA baseband chip from offline to online to enable the CDMA baseband chip.

204: Use the CDMA baseband chip to determine whether the mobile terminal has access to a network service. If the mobile terminal has access to a network service, execute step 207; and if the mobile terminal has no access to a network service, execute step 205.

After the mobile terminal enables the CDMA baseband chip, the mobile terminal uses the enabled CDMA baseband chip to determine whether the mobile terminal has access to a network service, so as to obtain time information according to the network service.

205: The mobile terminal initiates an emergency call when the mobile terminal has no access to a network service.

There may be many possible reasons for why the mobile terminal has no access to a network service, that is, it does not reside on a network, in a network coverage area. For example, a card is not inserted in the mobile terminal; or the current network is a roaming network, but the user information is not subscribed with a roaming protocol, so the mobile terminal cannot reside on the network; or the user chooses to disable the CDMA baseband chip; or the mobile terminal is in an airplane mode.

In this embodiment, when it is determined that the mobile terminal has no access to a network service, the mobile terminal actively initiates an emergency call. The emergency call process of the mobile terminal includes a network search process, which further includes selecting a channel and attempting to capture a pilot. When a pilot is successfully captured, the mobile terminal can receive a sync channel message sent by a base station. The initiating an emergency call by the mobile terminal specifically includes: invoking an interface for initiating a call, for example, a cm_orig_call() function (which may have other names on different platforms), selecting a number from an emergency call list, and selecting an emergency call as the call type.

206: Receive a sync channel message which is obtained through searching during the emergency call process and terminate the emergency call, where the sync channel message carries time information, and then execute step 208.

In this embodiment, after initiating an emergency call, the mobile terminal can capture pilot information about a neighboring network through the network search process in the emergency call process. After capturing the pilot information, the mobile terminal can receive a sync channel message from the neighboring network, and after receiving the sync channel message, the terminal must terminate the emergency call, so as to prevent a call error such as a false alarm.

In this embodiment, when initiating the emergency call, the mobile terminal listens to received messages, and when receiving the sync channel message, the mobile terminal terminates the emergency call, for example, by invoking a cm_end_call() function.

Preferably, if the mobile terminal does not receive the sync channel message during a first preset period of time, the mobile terminal may stop the emergency call and initiate another emergency call after a second preset period of time, thereby attempting to capture pilot information. The first preset period of time and the second preset period of time may be set by technicians during the developing process and are not specifically limited herein.

207: Obtain a sync channel message from a network side, and execute step 208.

When it is determined that the mobile terminal has access to a network service, the mobile terminal obtains a sync channel message from a network side. The specific process is the same as that of the prior art and is not repeated herein.

208: Implement computing according to the system time, the elapsed seconds after the system time, and the time zone difference to obtain time.

In this embodiment, the time information carried in the sync channel message includes: a sys_time parameter which represents the system time, a lp_sec parameter which represents the elapsed seconds after the system time, a ltm off parameter which represents the time zone difference, and a DayLT (Daylight savings time indicator) which represents a daylight savings time indicator.

Preferably, the implementing computing according to the system time, the elapsed seconds after the system time, and the time zone difference to obtain time includes:

implementing computing according to the system time, the elapsed seconds after the system time, and the time zone difference to obtain time by using the following formula:

$$\text{the time} = \text{UTC (Universal Time Coordinated, universal time coordinated) time offset} \times 80 \div 1000 + \text{benchmark time, where}$$

$$\text{UTC time offset} = \text{system time} - \text{elapsed seconds after the system time} \times 12.5 + \text{time zone difference} \times 22500;$$

the unit of the UTC time offset is 80 milliseconds, the unit of the system time is 80 milliseconds, the unit of the elapsed seconds after the system time is second, the unit of the time zone difference is 30 minutes, and the benchmark time is 00:00 on January 6, 1980.

It should be noted that the time is specific in year, month, day, hour, minute, and second after addition.

For different mobile terminal systems, there are different methods for computing the time, and the foregoing computing method is only taken as an example for illustration herein.

Preferably, after the time is obtained, the obtained time is used for adjusting local time of the mobile terminal, so that the local time is synchronous with the obtained time.

The method provided by this embodiment is applicable to a mobile terminal including a CDMA baseband chip, such as a CDMA1x single-mode terminal, a CDMA1x/EV-DO (Evolution and Data Only, evolution) dual-mode terminal, and a CDMA+GSM (Global System for Mobile communications, global system for mobile communications) terminal. In a situation where a UIM card is not inserted in the mobile terminal or the UIM card of the mobile terminal is PIN-enabled but cannot be unlocked, the method provided by this embodiment may be adopted to obtain time.

In the method provided by the present invention, in a situation where time synchronization needs to be implemented and a mobile terminal has no access to a network service, the terminal initiates an emergency call and implements network search during the emergency call process, so as to obtain first signaling, that is, a sync channel message, for interacting with the network during the network search process. Once obtaining the sync channel message, the terminal immediately terminates the initiated emergency call process, extracts time information carried in the sync channel message, and obtains time according to the time information carried in the sync channel message, thereby achieving the purpose of obtaining time from a network side without affecting other services when the terminal has no access to a network service. Further, when the mobile terminal is a multiple baseband chip mobile terminal including at least one CDMA baseband chip, the working state of the CDMA baseband chip is determined, so that when the CDMA baseband chip is not in a working state, the mobile terminal enables the CDMA baseband chip to implement the subsequent emergency call process.

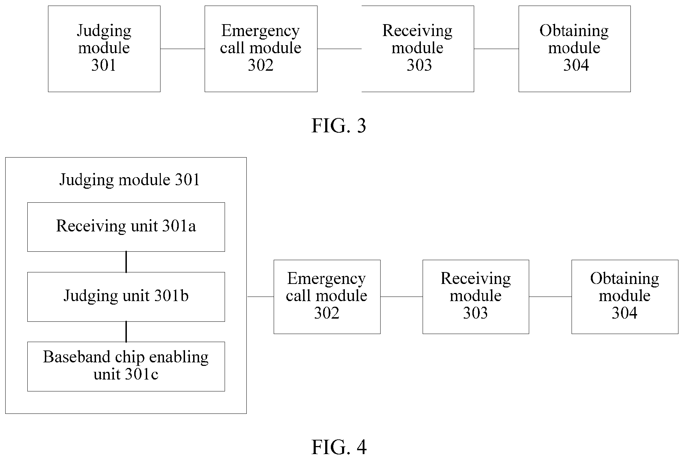

FIG. 3 is a schematic structural diagram of a time obtaining apparatus according to an embodiment of the present invention. Referring to FIG. 3, the apparatus includes:

a judging module 301, configured to receive a time obtaining request and determine whether a mobile terminal has access to a network service;
an emergency call module 302, configured to initiate an emergency call by the mobile terminal when the mobile terminal has no access to a network service;
a receiving module 303, configured to receive a sync channel message which is obtained through searching during the emergency call process, where
the emergency call module 302 is also configured to terminate the emergency call when the receiving module 303 receives the sync channel message which is obtained through searching during the emergency call process, and the sync channel message carries time information; and
an obtaining module 304, configured to obtain time according to the time information.

Preferably, the mobile terminal displays an interface for manually updating time, where the interface includes a time obtaining option, and the mobile terminal receives the time obtaining request sent by a user by triggering the time obtaining option; or

the mobile terminal periodically triggers a time obtaining request according to a preset interval, so that the mobile terminal receives the time obtaining request; or

the mobile terminal triggers a time obtaining request when starting up, so that the mobile terminal receives the time obtaining request.

The time information includes system time, elapsed seconds after the system time, and a time zone difference. The obtaining module 304 is specifically configured to implement computing according to the system time, the elapsed seconds after the system time, and the time zone difference to obtain time.

Preferably, the obtaining module 304 is specifically configured to implement computing according to the system time, the elapsed seconds after the system time, and the time zone difference to obtain time by using the following formula:

$$\text{the time} = \text{universal time coordinated UTC time offset} \times 80 \div 1000 + \text{benchmark time},$$

where

$$\text{UTC time offset} = \text{system time} - \text{elapsed seconds after the system time} \times 12.5 + \text{time zone difference} \times 22500;$$

the unit of the UTC time offset is 80 milliseconds, the unit of the system time is 80 milliseconds, the unit of the elapsed seconds after the system time is second, the unit of the time zone difference is 30 minutes, and the benchmark time is 00:00 on January 6, 1980.

FIG. 4 is a schematic structural diagram of a time obtaining apparatus according to an embodiment of the present invention. Referring to FIG. 4, the apparatus includes: a judging module 301, an emergency call module 302, a receiving module 303, and an obtaining module 304, where

the judging module 301 includes:

a receiving unit 301a, configured to receive a time obtaining request;

a judging unit 301b, configured to determine whether a CDMA baseband chip is in a working state; and

a baseband chip enabling unit 301c, configured to enable the CDMA baseband chip when the judging unit determines that the CDMA baseband chip is not in a working state, and use the enabled CDMA baseband chip to determine whether the mobile terminal has access to a network service,

or directly use the CDMA baseband chip to determine whether the mobile terminal has access to a network service when the judging unit 301b determines that the CDMA baseband chip is in a working state.

An embodiment of the present invention also provides a mobile terminal, where the mobile terminal includes any one of the foregoing time obtaining apparatuses.

An embodiment of the present invention also provides a mobile terminal, and preferably, the mobile terminal is a mobile phone. The mobile terminal includes any one of the time obtaining apparatuses in the foregoing embodiments of the present invention and further includes: a radio frequency circuit, an audio frequency circuit, and a power supply circuit, where

the radio frequency circuit is configured to establish communication between the mobile phone and a wireless network to implement data receiving and transmission between the mobile phone and the wireless network;

the audio frequency circuit is configured to collect voice and convert the collected voice into voice data, so that the mobile phone sends the voice data to the wireless network through the radio frequency circuit, and/or convert voice data received by the mobile phone from the wireless network through the radio frequency circuit back to voice and play the voice to a user; and

the power supply circuit is configured to supply power to circuits or components of the mobile phone to ensure normal working of the mobile phone.

The terminal device may be a mobile phone, a man-machine interaction terminal, an electronic book, or other terminal devices with a display function. When the terminal device is a mobile phone, the mobile phone also includes a shell, a circuit board, a microphone, and a loudspeaker to complete basic functions of the mobile phone. The following respectively introduces the shell, the circuit board, the microphone, and the loudspeaker.

The circuit board is arranged inside the shell.

The microphone is configured to collect voice and convert the collected voice into voice data, so that the mobile phone sends the voice data to a wireless network through the radio frequency circuit.

The loudspeaker is configured to convert voice data received by the mobile phone from the wireless network through the radio frequency circuit back to voice and play the voice to a user.

The mobile terminal provided by the present invention is a terminal including a CDMA baseband chip, such as a CDMA1x single-mode terminal, a CDMA1x/EVDO dual-mode terminal, or a CDMA+GSM terminal.

A person of ordinary skill in the art may understand that all or a part of the steps of the foregoing embodiments may be implemented through hardware, or may be implemented by a program instructing relevant hardware. The program may be stored in a computer readable storage medium. The storage medium may be a read-only memory, a magnetic disk, or an optical disc.

**Claims**

1.  A time obtaining method, comprising:

    receiving (101), by a mobile terminal, a time obtaining request,
    in response to receiving the time obtaining request, determining, by a mobile terminal, whether the mobile terminal has access to a network service;
    initiating (102), by the mobile terminal, an emergency call in response to determining that the mobile terminal has no access to a network service;
    receiving (103), by a mobile terminal, a sync channel message which is obtained through searching during a process of the emergency call and terminating the emergency call, wherein the sync channel message carries time information; and
    obtaining (104) time according to the time information.

2.  The method according to claim 1, wherein the receiving, by a mobile terminal, a time obtaining request comprises:

    displaying, by the mobile terminal, an interface for manually updating time, wherein the interface comprises a time obtaining option; and receiving, by the mobile terminal, the time obtaining request sent by a user by triggering the time obtaining option; or
    periodically triggering, by the mobile terminal, a time obtaining request according to a preset interval, so that the mobile terminal receives the time obtaining request; or
    triggering, by the mobile terminal, a time obtaining request when the mobile terminal starts up, so that the mobile terminal receives the time obtaining request.

3.  The method according to claim 1, wherein the time information comprises system time, elapsed seconds after the system time, and a time zone difference, and the obtaining time according to the time information comprises:
    implementing computing according to the system time, the elapsed seconds after the system time, and the time zone difference to obtain the time.

4.  The method according to claim 3, wherein the implementing computing according to the system time, the elapsed seconds after the system time, and the time zone difference to obtain the time comprises:

    implementing computing according to the system time, the elapsed seconds after the system time, and the time zone difference to obtain the time by using the following formula:

$$\text{the time} = \text{universal time coordinated UTC time offset} \times 80 \div 1000 + \text{benchmark time},$$

    wherein

$$\text{UTC time offset} = \text{system time} - \text{elapsed seconds after the system time} \times 12.5 + \text{time zone difference} \times 22500;$$

    the unit of the UTC time offset is 80 milliseconds, the unit of the system time is 80 milliseconds, the unit of the elapsed seconds after the system time is second, the unit of the time zone difference is 30 minutes, and the benchmark time is 00:00 on January 6, 1980.

5. The method according to claim 1, wherein the determining whether the mobile terminal has access to a network service comprises:

determining whether a code division multiple access CDMA baseband chip is in a working state after the mobile terminal receives the time obtaining request; and

enabling the CDMA baseband chip when the CDMA baseband chip is not in a working state, and using the enabled CDMA baseband chip to determine whether the mobile terminal has access to a network service; or directly using the CDMA baseband chip to determine whether the mobile terminal has access to a network service when the CDMA baseband chip is in a working state.

6. A time obtaining apparatus, comprising:

a judging module (301), configured to receive a time obtaining request, and determine whether a mobile terminal has access to a network service in response to receiving the time obtaining request;

an emergency call module (302), configured to initiate an emergency call by the mobile terminal in response to determining that the mobile terminal has no access to a network service;

a receiving module (303), configured to receive a sync channel message which is obtained through searching during a process of the emergency call, wherein

the emergency call module is also configured to terminate the emergency call when the receiving module receives the sync channel message which is obtained through searching during the process of the emergency call, and the sync channel message carries time information; and

an obtaining module (304), configured to obtain time according to the time information.

7. The apparatus according to claim 6, wherein the mobile terminal is configured to display an interface for manually updating time, the interface comprises a time obtaining option, the mobile terminal is enabled to receive the time obtaining request sent by a user by triggering the time obtaining option; or

the mobile terminal is configured to periodically trigger a time obtaining request according to a preset interval, so that the mobile terminal is enabled to receive the time obtaining request; or

the mobile terminal is configured to trigger a time obtaining request when starting up, so that the mobile terminal is enabled to receive the time obtaining request.

8. The apparatus according to claim 7, wherein the time information comprises system time, elapsed seconds after the system time, and a time zone difference, and the obtaining module is specifically configured to implement computing according to the system time, the elapsed seconds after the system time, and the time zone difference to obtain the time.

9. The apparatus according to claim 8, wherein the obtaining module is specifically configured to implement computing according to the system time, the elapsed seconds after the system time, and the time zone difference to obtain the time by using the following formula:

$$\text{the time} = \text{universal time coordinated UTC time offset} \times 80 \div 1000 + \text{benchmark time},$$

wherein

$$\text{UTC time offset} = \text{system time} - \text{elapsed seconds after the system time} \times 12.5 + \text{time zone difference} \times 22500;$$

the unit of the UTC time offset is 80 milliseconds, the unit of the system time is 80 milliseconds, the unit of the elapsed seconds after the system time is second, the unit of the time zone difference is 30 minutes, and the benchmark time is 00:00 on January 6, 1980.

10. The apparatus according to claim 6, wherein the judging module comprises:

a receiving unit (301a), configured to receive a time obtaining request;

a judging unit (301b), configured to determine whether a CDMA baseband chip is in a working state; and

a baseband chip enabling unit (301c), configured to enable the CDMA baseband chip when the judging unit determines that the CDMA baseband chip is not in a working state, and use the enabled CDMA baseband chip to determine whether the mobile terminal has access to a network service;

or directly use the CDMA baseband chip to determine whether the mobile terminal has access to a network service when the judging unit determines that the CDMA baseband chip is in a working state.

11. A mobile terminal, wherein the mobile terminal comprises a time obtaining apparatus according to any one of claims 6 to 10.

12. The mobile terminal according to claim 11, wherein the mobile terminal is a mobile phone, and the mobile phone comprises a radio frequency circuit, an audio frequency circuit, and a power supply circuit, wherein

the radio frequency circuit is configured to establish communication between the mobile phone and a wireless network to implement data receiving and transmission between the mobile phone and the wireless network;

the audio frequency circuit is configured to collect voice and convert the collected voice into voice data, so that the mobile phone sends the voice data to the wireless network through the radio frequency circuit, and/or convert voice data received by the mobile phone from the wireless network through the radio frequency circuit back to voice and play the voice to a user; and

the power supply circuit is configured to supply power to circuits or components of the mobile phone.

**Patentansprüche**

1. Zeiterfassungsverfahren, umfassend:

Empfangen (101), durch ein mobiles Endgerät, einer Zeiterfassungsanforderung, als Reaktion auf das Empfangen der Zeiterfassungsanforderung, Bestimmen, durch ein mobiles Endgerät, ob das mobile Endgerät Zugriff auf einen Netzwerkdienst hat;

Initiieren (102), durch das mobile Endgerät, eines Notrufs als Reaktion auf das Bestimmen, dass das mobile Endgerät keinen Zugriff auf einen Netzwerkdienst hat;

Empfangen (103), durch ein mobiles Endgerät, einer Sync-Kanalnachricht, die durch Suchen während eines Prozesses des Notrufs erfasst wird, und Beenden des Notrufs, wobei die Sync-Kanalnachricht Zeitinformationen führt; und

Erfassen (104) der Zeit gemäß den Zeitinformationen.

2. Verfahren nach Anspruch 1, wobei das Empfangen, durch ein mobiles Endgerät, einer Zeiterfassungsanforderung Folgendes umfasst:

Anzeigen, durch das mobile Endgerät, einer Schnittstelle zum manuellen Aktualisieren der Zeit, wobei die Schnittstelle eine Zeiterfassungsoption umfasst; und Empfangen, durch das mobile Endgerät, der durch einen Benutzer gesendeten Zeiterfassungsanforderung durch Auslösen der Zeiterfassungsoption oder

periodisches Auslösen, durch das mobile Endgerät, einer Zeiterfassungsanforderung gemäß einem voreingestellten Intervall, so dass das mobile Endgerät die Zeiterfassungsanforderung empfängt; oder

Auslösen, durch das mobile Endgerät, einer Zeiterfassungsanforderung, wenn das mobile Endgerät startet, so dass das mobile Endgerät die Zeiterfassungsanforderung empfängt.

3. Verfahren nach Anspruch 1, wobei die Zeitinformationen Systemzeit, verstrichene Sekunden nach der Systemzeit und eine Zeitzonendifferenz umfassen und das Erfassen der Zeit gemäß den Zeitinformationen Folgendes umfasst: Implementieren einer Datenverarbeitung gemäß der Systemzeit, den verstrichenen Sekunden nach der Systemzeit und der Zeitzonendifferenz, um die Zeit zu erfassen.

4. Verfahren nach Anspruch 3, wobei das Implementieren einer Datenverarbeitung gemäß der Systemzeit, den verstrichenen Sekunden nach der Systemzeit und der Zeitzonendifferenz, um die Zeit zu erfassen, Folgendes umfasst:

Implementieren einer Datenverarbeitung gemäß der Systemzeit, den verstrichenen Sekunden nach der Systemzeit und der Zeitzonendifferenz, um die Zeit zu erfassen, unter Verwendung der folgenden Formel:

die Zeit = „Universal Time Coordinated"- bzw. UTC-Zeitversatz $\times$ 80 $\div$ 1000 + Benchmark-Zeit, wobei UTC-Zeitversatz = Systemzeit - verstrichene Sekunden nach der Systemzeit $\times$ 12,5 + Zeitzonendifferenz $\times$ 22500;

wobei die Einheit des UTC-Zeitversatzes 80 Millisekunden ist, die Einheit der Systemzeit 80 Millisekunden ist, die Einheit der verstrichenen Sekunden nach der Systemzeit Sekunden ist, die Einheit der Zeitzonendifferenz 30 Minuten ist und die Benchmark-Zeit 00:00 am 6. Januar 1980 ist.

5. Verfahren nach Anspruch 1, wobei das Bestimmen, ob das mobile Endgerät Zugriff auf einen Netzwerkdienst hat, Folgendes umfasst:

Bestimmen, ob sich ein Codemultiplex-Mehrfachzugriff- bzw. CDMA-Basisbandchip in einem Arbeitszustand befindet, nachdem das mobile Endgerät die Zeiterfassungsanforderung empfängt; und
Aktivieren des CDMA-Basisbandchips, wenn sich der CDMA-Basisbandchip nicht in einem Arbeitszustand befindet, und Verwenden des aktivierten CDMA-Basisbandchips, um zu bestimmen, ob das mobile Endgerät Zugriff auf einen Netzwerkdienst hat; oder direktes Verwenden des CDMA-Basisbandchips, um zu bestimmen, ob das mobile Endgerät Zugriff auf einen Netzwerkdienst hat, wenn sich der CDMA-Basisbandchip in einem Arbeitszustand befindet.

6. Zeiterfassungsvorrichtung, umfassend:

ein Beurteilungsmodul (301), das konfiguriert ist zum Empfangen einer Zeiterfassungsanforderung und zum Bestimmen, ob ein mobiles Endgerät einen Zugriff auf einen Netzwerkdienst hat, als Reaktion auf das Empfangen der Zeiterfassungsanforderung;
ein Notrufmodul (302), das konfiguriert ist zum Initiieren eines Notrufs durch das mobile Endgerät als Reaktion auf das Bestimmen, dass das mobile Endgerät keinen Zugriff auf einen Netzwerkdienst hat;
ein Empfangsmodul (303), das konfiguriert ist zum Empfangen einer Sync-Kanalnachricht, die durch Suchen während eines Prozesses des Notrufs erfasst wird, wobei
das Notrufmodul auch konfiguriert ist zum Beenden des Notrufs, wenn das Empfangsmodul die Sync-Kanalnachricht empfängt, die durch Suchen während des Prozesses des Notrufs erfasst wird, und die Sync-Kanalnachricht Zeitinformationen führt; und
ein Erfassungsmodul (304), das konfiguriert ist zum Erfassen der Zeit gemäß den Zeitinformationen.

7. Vorrichtung nach Anspruch 6, wobei das mobile Endgerät konfiguriert ist zum Anzeigen einer Schnittstelle zum manuellen Aktualisieren der Zeit, die Schnittstelle eine Zeiterfassungsoption umfasst, das mobile Endgerät aktiviert ist, um die durch einen Benutzer gesendete Zeiterfassungsanforderung durch Auslösen der Zeiterfassungsoption zu empfangen; oder
das mobile Endgerät konfiguriert ist zum periodischen Auslösen einer Zeiterfassungsanforderung gemäß einem voreingestellten Intervall, so dass das mobile Endgerät aktiviert ist, um die Zeiterfassungsanforderung zu empfangen; oder
das mobile Endgerät konfiguriert ist zum Auslösen einer Zeiterfassungsanforderung, wenn es startet, so dass das mobile Endgerät aktiviert ist, um die Zeiterfassungsanforderung zu empfangen.

8. Vorrichtung nach Anspruch 7, wobei die Zeitinformationen Systemzeit, verstrichene Sekunden nach der Systemzeit und eine Zeitzonendifferenz umfassen und das Erfassungsmodul spezifisch konfiguriert ist zum Implementieren einer Datenverarbeitung gemäß der Systemzeit, den verstrichenen Sekunden nach der Systemzeit und der Zeitzonendifferenz, um die Zeit zu erfassen.

9. Vorrichtung nach Anspruch 8, wobei das Erfassungsmodul spezifisch konfiguriert ist zum Implementieren einer Datenverarbeitung gemäß der Systemzeit, den verstrichenen Sekunden nach der Systemzeit und der Zeitzonendifferenz, um die Zeit zu erfassen, unter Verwendung der folgenden Formel:

die Zeit = „Universal Time Coordinated"- bzw. UTC-Zeitversatz $\times$ 80 $\div$ 1000 + Benchmark-Zeit, wobei UTC-Zeitversatz = Systemzeit - verstrichene Sekunden nach der Systemzeit $\times$ 12,5 + Zeitzonendifferenz $\times$ 22500;

wobei die Einheit des UTC-Zeitversatzes 80 Millisekunden ist, die Einheit der Systemzeit 80 Millisekunden ist, die Einheit der verstrichenen Sekunden nach der Systemzeit Sekunden ist, die Einheit der Zeitzonendifferenz 30 Minuten ist und die Benchmark-Zeit 00:00 am 6. Januar 1980 ist.

10. Vorrichtung nach Anspruch 6, wobei das Beurteilungsmodul Folgendes umfasst:

eine Empfangseinheit (301a), die konfiguriert ist zum Empfangen einer Zeiterfassungsanforderung;
eine Beurteilungseinheit (301b), die konfiguriert ist zum Bestimmen, ob sich ein CDMA-Basisbandchip in einem Arbeitszustand befindet; und
eine Basisbandchip-Aktivierungseinheit (301c), die konfiguriert ist zum Aktivieren des CDMA-Basisbandchips, wenn die Beurteilungseinheit bestimmt, dass sich der CDMA-Basisbandchip nicht in einem Arbeitszustand befindet, und zum Verwenden des aktivierten CDMA-Basisbandchips, um zu bestimmen, ob das mobile Endgerät Zugriff auf einen Netzwerkdienst hat;
oder zum direkten Verwenden des CDMA-Basisbandchips, um zu bestimmen, ob das mobile Endgerät Zugriff auf einen Netzwerkdienst hat, wenn die Beurteilungseinheit bestimmt, dass sich der CDMA-Basisbandchip in einem Arbeitszustand befindet.

11. Mobiles Endgerät, wobei das mobile Endgerät eine Zeiterfassungsvorrichtung gemäß einem der Ansprüche 6 bis 10 umfasst.

12. Mobiles Endgerät nach Anspruch 11, wobei das mobile Endgerät ein Mobiltelefon ist und das Mobiltelefon eine Hochfrequenzschaltung, eine Audiofrequenzschaltung und eine Leistungsversorgungsschaltung umfasst, wobei:

die Hochfrequenzschaltung konfiguriert ist zum Aufbauen einer Kommunikation zwischen dem Mobiltelefon und einem drahtlosen Netzwerk, um einen Datenempfang und eine Datenübertragung zwischen dem Mobiltelefon und dem drahtlosen Netzwerk zu implementieren;
die Audiofrequenzschaltung konfiguriert ist zum Aufnehmen von Sprache und zum Umwandeln der aufgenommenen Sprache zu Sprachdaten, so dass das Mobiltelefon die Sprachdaten über die Hochfrequenzschaltung zum drahtlosen Netzwerk sendet, und/oder zum Umwandeln von Sprachdaten, die durch das Mobiltelefon vom drahtlosen Netzwerk über die Hochfrequenzschaltung empfangen werden, zurück zu Sprache und zum Abspielen der Sprache an einen Benutzer; und
die Leistungsversorgungsschaltung konfiguriert ist zum Liefern von Leistung an Schaltungen oder Komponenten des Mobiltelefons.

## Revendications

1. Procédé d'obtention de l'heure, comprenant les étapes consistant à :

recevoir (101), par un terminal mobile, une demande d'obtention de l'heure,
en réponse à la réception de la demande d'obtention de l'heure, déterminer, par un terminal mobile, si le terminal mobile a accès à un service en réseau ;
lancer (102), par le terminal mobile, un appel d'urgence en réponse à la détermination du fait que le terminal mobile n'a pas accès à un service en réseau ;
recevoir (103), par un terminal mobile, un message de canal de synchronisation qui est obtenu par une recherche effectuée durant un processus de l'appel d'urgence, puis arrêter l'appel d'urgence, le message de canal de synchronisation contenant des informations d'heure ; et
obtenir (104) l'heure à partir des informations d'heure.

2. Procédé selon la revendication 1, dans lequel la réception, par un terminal mobile, d'une demande d'obtention de l'heure comprend les étapes consistant à :

afficher, par le terminal mobile, une interface permettant de mettre à jour l'heure manuellement, l'interface comprenant une option d'obtention de l'heure ; et recevoir, par le terminal mobile, la demande d'obtention de l'heure envoyée par un utilisateur par un déclenchement de l'option d'obtention de l'heure ; ou

déclencher périodiquement, par le terminal mobile, une demande d'obtention de l'heure selon un intervalle prédéfini, afin que le terminal mobile reçoive la demande d'obtention de l'heure ; ou

déclencher, par le terminal mobile, une demande d'obtention de l'heure lorsque le terminal mobile démarre, afin que le terminal mobile reçoive la demande d'obtention de l'heure.

**3.** Procédé selon la revendication 1, dans lequel les informations d'heure comprennent l'heure système, les secondes écoulées après l'heure système et une différence de fuseau horaire, et l'obtention de l'heure à partir des informations d'heure consiste à :

mettre en oeuvre un calcul reposant sur l'heure système, les secondes écoulées après l'heure système et la différence de fuseau horaire pour obtenir l'heure.

**4.** Procédé selon la revendication 3, dans lequel la mise en oeuvre d'un calcul reposant sur l'heure système, les secondes écoulées après l'heure système et la différence de fuseau horaire pour obtenir l'heure consiste à :

mettre en oeuvre un calcul reposant sur l'heure système, les secondes écoulées après l'heure système et la différence de fuseau horaire pour obtenir l'heure au moyen de la formule suivante :

$$\text{l'heure} = \text{décalage de l'heure UTC (temps universel coordonné)} \times 80 \div 1000 + \text{temps de référence, où}$$

$$\text{décalage de l'heure UTC} = \text{heure système} - \text{secondes écoulées après l'heure système} \times 12{,}5 + \text{différence de fuseau horaire} \times 22500 \; ;$$

l'unité du décalage de l'heure UTC est de 80 millisecondes, l'unité de l'heure système est de 80 millisecondes, l'unité des secondes écoulées après l'heure système est la seconde, l'unité de la différence de fuseau horaire est de 30 minutes, et le temps de référence est 00:00 le 6 janvier 1980.

**5.** Procédé selon la revendication 1, dans lequel la détermination du fait du fait de savoir si le terminal mobile a accès à un service en réseau comprend les étapes consistant à :

déterminer si une puce de bande de base d'accès multiple par répartition de code, CDMA, est dans un état de fonctionnement après que le terminal mobile a reçu la demande d'obtention de l'heure ; et

activer la puce de bande de base CDMA lorsque la puce de bande de base CDMA n'est pas dans un état de fonctionnement, et utiliser la puce de bande de base CDMA activée pour déterminer si le terminal mobile a accès à un service en réseau ; ou utiliser directement la puce de bande de base CDMA pour déterminer si le terminal mobile a accès à un service en réseau lorsque la puce de bande de base CDMA est dans un état de fonctionnement.

**6.** Appareil d'obtention de l'heure, comprenant :

un module d'estimation (301), conçu pour recevoir une demande d'obtention de l'heure, et déterminer si un terminal mobile a accès à un service en réseau en réponse à la réception de la demande d'obtention de l'heure ;

un module d'appel d'urgence (302), conçu pour faire lancer un appel d'urgence par le terminal mobile en réponse à la détermination du fait que le terminal mobile n'a pas accès à un service en réseau ;

un module de réception (303), conçu pour recevoir un message de canal de synchronisation qui est obtenu par une recherche effectuée durant un processus de l'appel d'urgence,

le module d'appel d'urgence étant également conçu pour mettre fin à l'appel d'urgence lorsque le module de réception reçoit le message de canal de synchronisation qui est obtenu par une recherche effectuée durant le processus de l'appel d'urgence, et le message de canal de synchronisation contenant des informations d'heure ; et

un module d'obtention (304), conçu pour obtenir l'heure à partir des informations d'heure.

**7.** Appareil selon la revendication 6, dans lequel le terminal mobile est conçu pour afficher une interface permettant de mettre à jour l'heure manuellement, l'interface comprenant une option d'obtention de l'heure, le terminal mobile étant activé pour recevoir la demande d'obtention de l'heure envoyée par un utilisateur par un déclenchement de l'option d'obtention de l'heure ; ou
le terminal mobile est conçu pour déclencher périodiquement une demande d'obtention de l'heure selon un intervalle prédéfini, afin que le terminal mobile soit activé pour recevoir la demande d'obtention de l'heure ; ou
le terminal mobile est conçu pour déclencher une demande d'obtention de l'heure lorsqu'il démarre, afin que le terminal mobile soit activé pour recevoir la demande d'obtention de l'heure.

8. Appareil selon la revendication 7, dans lequel les informations d'heure comprennent l'heure système, les secondes écoulées après l'heure système et une différence de fuseau horaire, et le module d'obtention est spécifiquement conçu pour mettre en oeuvre un calcul reposant sur l'heure système, les secondes écoulées après l'heure système et la différence de fuseau horaire pour obtenir l'heure.

9. Appareil selon la revendication 8, dans lequel le module d'obtention est spécifiquement conçu pour mettre en oeuvre un calcul reposant sur l'heure système, les secondes écoulées après l'heure système et la différence de fuseau horaire pour obtenir l'heure au moyen de la formule suivante :

$$\text{l'heure} = \text{décalage de l'heure UTC (temps universel coordonné)} \times 80 \div 1000 + \text{temps de référence, où}$$

$$\text{décalage de l'heure UTC} = \text{heure système} - \text{secondes écoulées après l'heure système} \times 12{,}5 + \text{différence de fuseau horaire} \times 22500 \; ;$$

l'unité du décalage de l'heure UTC est de 80 millisecondes, l'unité de l'heure système est de 80 millisecondes, l'unité des secondes écoulées après l'heure système est la seconde, l'unité de la différence de fuseau horaire est de 30 minutes, et le temps de référence est 00:00 le 6 janvier 1980.

10. Appareil selon la revendication 6, dans lequel le module d'estimation comprend :

une unité de réception (301a), conçue pour recevoir une demande d'obtention de l'heure ;
une unité d'estimation (301b), conçue pour déterminer si une puce de bande de base CDMA est dans un état de fonctionnement ; et
une unité d'activation de puce de bande de base (301c), conçue pour activer la puce de bande de base CDMA lorsque l'unité d'estimation détermine que la puce de bande de base CDMA n'est pas dans un état de fonctionnement, et utiliser la puce de bande de base CDMA activée pour déterminer si le terminal mobile a accès à un service en réseau ;
ou utiliser directement la puce de bande de base CDMA pour déterminer si le terminal mobile a accès à un service en réseau lorsque l'unité d'estimation détermine que la puce de bande de base CDMA est dans un état de fonctionnement.

11. Terminal mobile, le terminal mobile comprenant un appareil d'obtention de l'heure selon l'une quelconque des revendications 6 à 10.

12. Terminal mobile selon la revendication 11, le terminal mobile étant un téléphone mobile, et le téléphone mobile comprenant un circuit de radiofréquence, un circuit de fréquence audio et un circuit d'alimentation électrique, dans lequel terminal mobile le circuit de radiofréquence est conçu pour établir une communication entre le téléphone mobile et un réseau sans fil pour mettre en oeuvre la réception et l'émission de données entre le téléphone mobile et le réseau sans fil ;
le circuit de fréquence audio est conçu pour collecter la voix et convertir la voix collectée en données vocales, afin que le téléphone mobile envoie les données vocales au réseau sans fil par l'intermédiaire du circuit de radiofréquence, et/ou convertir les données vocales reçues par le téléphone mobile depuis le réseau sans fil par l'intermédiaire du circuit de radiofréquence pour restituer la voix et lire la voix à un utilisateur ; et
le circuit d'alimentation électrique est conçu pour fournir une alimentation électrique aux circuits ou composants du téléphone mobile.

A mobile terminal receives a time obtaining request and determines whether the mobile terminal has access to a network service — 101

The mobile terminal initiates an emergency call when the mobile terminal has no access to a network service — 102

Receive a sync channel message which is obtained through searching during the emergency call process and terminate the emergency call, where the sync channel message carries time information — 103

Obtain time according to the time information — 104

FIG. 1

A mobile terminal receives a time obtaining request — 201

The mobile terminal determines whether a CDMA baseband chip is in a working state — 202

Yes

No

When the CDMA baseband chip is not in a working state, enable the CDMA baseband chip — 203

Determine whether the mobile terminal has access to a network service — 204

No

The mobile terminal initiates an emergency call when the mobile terminal has no access to a network service — 205

Yes

Receive a sync channel message which is obtained through searching during the emergency call process and terminate the emergency call, where the sync channel message carries time information — 206

Obtain a sync channel message from a network side — 207

Implement computing according to system time, elapsed seconds after the system time, and a time zone difference to obtain time — 208

FIG. 2

| Judging module 301 | Emergency call module 302 | Receiving module 303 | Obtaining module 304 |

FIG. 3

| Judging module 301 |
| Receiving unit 301a |
| Judging unit 301b |
| Baseband chip enabling unit 301c |

| Emergency call module 302 | Receiving module 303 | Obtaining module 304 |

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070237118 A1